# EUROPÄISCHE PATENTANMELDUNG

(11) **EP 2 028 482 A1**
(43) Veröffentlichungstag der Anmeldung: **25.02.2009**
(21) Anmeldenummer: 07016223.5
(22) Anmeldetag: 18.08.2007
(51) Int. Cl.: G01N 27/00, G01N 21/55, G01N 21/77, G01N 29/032, G01N 29/036

(54) **Sensorsystem zum Erfassen von Analyten in geringer Konzentration**

(71) Anmelder: Grundfos Management A/S, 8850 Bjerringbro (DK)
(72) Erfinder: Bentien, Anders, 8541 Skødtrup (DK)
(74) Vertreter: Hemmer, Arnd

(57) **Zusammenfassung**

Die Erfindung betrifft ein Sensorsystem (2) zum Erfassen von Analyten in geringer Konzentration, welches zumindest ein Sensorelement (4; 50; 56; 62) mit wenigstens einem Erfassungsbereich (6) aufweist, der zur Detektion zumindest eines Analyten an seiner Oberfläche ausgebildet ist, wobei eine Spannungsquelle (14) , mittels welcher der Erfassungsbereich (6) des Sensorelementes (4; 50; 56; 62) mit einer elektrischen Spannung beaufschlagbar ist sowie ein entsprechendes Verfahren zum Erfassen von Analyten in geringer Konzentration

## Beschreibung

Die Erfindung betrifft ein Sensorsystem zum Erfassen von Analyten in geringer Konzentration sowie ein entsprechendes Verfahren zum Erfassen von Analyten in geringer Konzentration.

In vielen Anwendungsfällen ist es erforderlich, bestimmte Stoffe z. B. in Flüssigkeiten erfassen bzw. detektieren zu können. Dies können beispielsweise Gifte, Pestizide oder andere schädliche Stoffe in Wasser, insbesondere Trinkwasser sein. Dabei müssen häufig bereits geringe Konzentrationen solcher Stoffe detektiert bzw. erfasst werden.

Im Stand der Technik sind verschiedene Analyseverfahren bekannt, welche hierzu zum Einsatz kommen können. Dies sind beispielsweise Atomabsorptionsspektroskopie (AAS), Atomemissionsspektroskopie (AES) oder die Atommassenspektroskopie (AMS), wie beispielsweise in Today's Chemist at Work 8, 10, 42 (1999) offenbart. Dabei stellt die Atommassenspektroskopie die empfindlichste Methode dar. Alle drei Methoden erfordern jedoch äußerst teure Anlagen. Derartige Anlagen sind für die Echtzeitüberwachung, beispielsweise in der Trinkwasserversorgung nicht geeignet.

Es ist Aufgabe der Erfindung, ein ausreichend genaues bzw. empfindliches Sensorsystem zum Erfassen von Analyten in geringen Konzentrationen sowie ein entsprechendes Verfahren zum Erfassen von Analyten in geringen Konzentrationen bereitzustellen, welches kostengünstiger ist und insbesondere eine Echtzeitüberwachung ermöglicht.

Diese Aufgabe wird durch ein Sensorsystem zum Erfassen von Analyten in geringer Konzentration mit den im Anspruch 1 angegebenen Merkmalen sowie durch ein Verfahren mit den im Anspruch 15 angegebenen Merkmalen gelöst. Bevorzugte Ausführungsformen ergeben sich aus den Unteransprüchen, der nachfolgenden Beschreibung sowie den beigefügten Figuren.

Das erfindungsgemäße Sensorsystem dient zum Erfassen von Analyten in geringer Konzentration insbesondere in einer Fluid- oder Flüssigkeitsumgebung, beispielsweise Wasser. Das Sensorsystem weist zumindest ein Sensorelement mit wenigstens einem Erfassungsbereich auf. Der Erfassungsbereich ist so ausgebildet, dass er an seiner Oberfläche zumindest einen Analyten erfassen bzw. detektieren kann. Das bedeutet bei dem erfindungsgemäßen Sensorsystem erfolgt das Erkennen, dass in der Umgebung ein zu erfassender Analyt vorhanden ist, durch das Sensorelement an dessen Erfassungsbereich. Dabei ist das Sensorelement zumindest derart ausgestaltet, dass es überhaupt die Anwesenheit eines Analyten erkennen kann, vorzugsweise jedoch so ausgestaltet, dass es auch die Quantität des Analyten erfassen kann.

Erfindungsgemäß ist das Sensorsystem darüber hinaus derart ausgebildet, dass eine Ladungsquelle bzw. Spannungsquelle vorgesehen ist, mittels welcher der Erfassungsbereich des Sensorelementes mit einer elektrischen Spannung bzw. Ladung beaufschlagbar ist. Hierdurch kann eine Potentialdifferenz zwischen dem Erfassungsbereich und der Umgebung erzeugt werden, wodurch Analyten in der Umgebung, z. B. einem umgebenden Fluid, elektrochemisch an dem Erfassungsbereich angelagert werden. Dort können die Analyten dann von dem Sensorelement detektiert werden.

Durch dieses System wird ferner erreicht, dass auch bei geringer Konzentration des zu erfassenden Analyten in einem Fluid am Erfassungsbereich des Sensorelementes eine höhere Konzentration dieses Analyten bereitgestellt wird, welche einfacher zu erfassen bzw. zu detektieren ist. Dies ermöglicht es, kostengünstigere Sensorelemente einzusetzen, welche für sich nicht die erforderliche Empfindlichkeit zum Erfassen der geringen Konzentrationen des Analyten aufweisen würden.
Ein weiterer Vorteil liegt darin, dass der Prozess reversibel ist, d. h. durch Abschalten oder Änderung der Polarität kann erreicht werden, dass die angelagerten Stoffe bzw. Ionen von der Oberfläche des Erfassungsbereichs wieder entfernt werden, so dass der Erfassungsbereich wieder in seinen ursprünglichen Zustand zurückversetzt wird. Dies ermöglicht einen dauerhaften Einsatz des Sensorsystems ohne dass der Austausch von Sensorelementen erforderlich wäre.

Darüber hinaus kann mit dem erfindungsgemäßen System sehr einfach gesteuert oder erfasst werden, welche Stoffe oder Ionen sich an dem Erfassungsbereich anlagern. Insofern muss der Erfassungsbereich nicht in spezieller Weise ausgebildet werden, um bestimmte zu erfassende Stoffe anzuziehen bzw. die Anlagerung dieser Stoffe bzw. Analyte zu begünstigen.

Eine Bewegung bzw. Konzentration der zu erfassenden Analyte in dem umgebenden Fluid wird erst dann erreicht, wenn die Potentialdifferenz zwischen Erfassungsbereich und Umgebung so groß ist, dass das lonisierungspotential des zu erfassenden Analyten überschritten wird. Insofern kann durch die im Erfassungsbereich angelegte Spannung, d. h. die Potentialdifferenz gesteuert werden, welche Analyte sich am dem Erfassungsbereich der Oberfläche anlagern. In Kenntnis des lonisierungspotentials bestimmter Stoffe bzw. Analyte kann bei Erfassung der aktuellen Potentialdifferenz und gleichzeitiger Erfassung des Messergebnisses des Sensorelemtes dieses Messergebnis einem bestimmten Analyten zugeordnet werden, dessen lonisierungspotential der erfassten Potentialdifferenz entspricht. Dies kann durch eine geeignete Auswerteeinrichtung geschehen.

Vorzugsweise ist die Spannungsquelle mit dem Erfassungsbereich und einer Gegenelektrode derart verbunden, dass die von der Spannungsquelle erzeugt Spannung zwischen dem Erfassungsbereich und der Gegenelektrode anlegbar ist. Dabei befinden sich sowohl die Gegenelektrode als auch der Erfassungsbereich in dem Fluid, in welchem die Erfassung eines Analyten stattfinden soll. Anstelle der Gegenelektrode könnte die Spannungs- bzw. Potentialdifferenz auch zwischen dem Erfassungsbereich und Masse, beispielsweise auch der umgebenden Wandung einer Rohrleitung angelegt werden. Ferner kann auch auf andere Weise eine elektrische Ladung auf den Erfassungsbereich aufgebracht werden.

Die von der Spannungsquelle erzeugt Spannung entspricht, wie ausgeführt, vorzugsweise dem lonisierungspotential eines zu erfassenden Analyten oder wird höher als dieses lonisierungspotential gewählt. Beim Überschreiten des lonisierungspotentials findet eine lonisierung des zu erfassenden Analyten statt, so dass dieser dann aufgrund seiner Ladung zu dem Erfassungsbereich hinbewegt wird und sich an diesem anlagert. An dem Erfassungsbereich kann dann das Vorhandensein und gegebenenfalls die Quantität des dort angelagerten Analyten detektiert werden.

Weiter bevorzugt ist die Spannungsquelle derart ausgebildet, dass die Ladung bzw. Spannung in Betrag und/oder Polarität veränderbar ist und insbesondere in ihrem zeitlichen Verlauf veränderbar ist. Dadurch ist es möglich, die Spannung so zu verändern, dass verschiedene lonisierungspotentiale erreicht werden können, um unterschiedliche Analyte an dem Erfassungsbereich des Sensorelementes anzulagern. Auf diese Weise können verschiedene Analyte mit ein- und demselben universellen Sensorelement detektiert werden. Darüber hinaus ist es, wie oben beschrieben, auch möglich, die an der Oberfläche des Erfassungsbereiches angelagerte Analyte von diesem auch wieder zu entfernen, indem die Spannung unter das lonisierungspotential der Analyte reduziert wird oder gar die Polarität der Spannung umgekehrt wird. So kann ein reversibler Prozess erreicht werden. Wenn nun im zeitlichen Verlauf die Spannung periodisch das lonisierungspotential eines zu erfassenden Analyten erreicht bzw. überschreitet und dann später wieder unterschreitet, kann somit eine quasi kontinuierliche Erfassung von Analyten in einem Medium bzw. Fluid erreicht werden.

Besonders bevorzugt erfolgt die Erfassung der Analyte in einem Stripping-Prozess, bei welchem der Spannungsverlauf zeitlich so erfolgt, dass die Spannung zunächst über das lonisierungspotential oder bis zu dem lonisierungspotential des zu erfassenden Analyten ansteigt, so dass dieser an dem Erfassungsbereich angelagert wird. Anschließend wird die Spannung wieder abgesenkt, so dass sie das lonisierungspotential unterschreitet, wobei die Analyte bzw. Ionen wieder von dem Erfassungsbereich entfernt werden. Dabei kann dann von dem Sensorelement der Unterschied des Zustandes mit angelagertem Analyt und anschließend mit entferntem Analyt erfasst werden und hierdurch insbesondere auch die Konzentration bzw. Quantität des Analyten bestimmt werden.

Weiter bevorzugt ist das Sensorelement derart ausgebildet, dass es ein Ausgangssignal erzeugt, welches abhängig von der Konzentration des Analyten an dem Erfassungsbereich ist. Auf diese Weise kann nicht nur das Vorhandensein des Analyten, sondern auch die Quantität, d. h. die Konzentration des Analyten in dem umgebenden Medium bestimmt werden.

Besonders bevorzugt ist eine Auswerteeinrichtung vorgesehen, welche zur Erfassung und gemeinsamer Auswertung eines Ausgangssignals des Sensorelementes und der aktuellen Spannung, welche an dem Erfassungsbereich des Sensorelementes anliegt, ausgebildet ist. Auf diese Weise ist es, wie oben ausgeführt, möglich, den von dem Sensorelement erfassten Wert eindeutig einem bestimmten Analyten zuzuordnen, da die aktuelle Spannung gemessen werden kann. Insbesondere wird dabei im Laufe der Messung das lonisierungspotential des zu bestimmenden Analyten unter- oder überschritten, so dass an dem Sensorelement ggf. ein Signalunterschied zwischen dem Zustand unterhalb des lonisierungspotentials und bei oder oberhalb des lonisierungspotentials erfasst werden kann. Auf diese Weise kann dann das Vorhandensein eines bestimmten Analyten mit diesem lonisierungspotential erfasst und insbesondere, falls das Sensorelement eine quantitative Messung zulässt, auch die Konzentration des Analyten in dem umgebenden Fluid bestimmt werden.

Idealerweise wird die Spannung kontinuierlich variiert, so dass zumindest das lonisierungspotential eines bestimmten Analyten regelmäßig über- und unterschritten wird, so dass eine quasi kontinuierliche Erfassung dieses Analyten möglich ist. Weiter bevorzugt ist es möglich, die Spannung so zu variieren, dass die lonisierungspotentiale verschiedener Analyte aufeinanderfolgend über- bzw. unterschritten werden. Beim Über- oder Unterschreiten eines bestimmten lonisierungspotentiales kann dann aktuell der Messwertunterschied des Sensorelementes erfasst werden, um das Vorhandensein und gegebenenfalls die Konzentration des zugehörigen Analyten mit gerade diesem lonisierungspotential zu bestimmen. Auf diese Weise können verschiedene Analyte in ein- und demselben Prozess mit ein- und demselben Sensorelement erfasst werden.

Gemäß einer weiteren bevorzugten Ausführungsform ist ein Spannungsmesssystem zum Erfassen der elektrischen Spannung zwischen dem Sensorelement und der Umgebung vorgesehen. Dieses Spannungsmesssystem kann in die Spannungsquelle integriert sein, bzw. in die Steuerung der Spannungsquelle integriert sein, so dass direkt bei der Erzeugung der Spannung der Wert der Spannung bekannt ist und einer Auswerteeinrichtung zur Verfügung gestellt werden kann. Alternativ kann ein separates Spannungsmesssystem vorgesehen sein, welches die an dem Erfassungsbereich anliegende Spannungsdifferenz vorzugsweise kontinuierlich erfasst.

Dazu kann weiter bevorzugt eine Referenzelektrode vorgesehen sein und das Spannungsmesssystem zum Erfassen der Spannung zwischen dieser Referenzelektrode und dem Erfassungsbereich des Sensorelementes ausgebildet sein. Die Referenzelektrode kann in einer speziellen Ausführungsform gleichzeitig als Gegenelektrode dienen, zwischen der und dem Erfassungsbereich die Spannung angelegt wird.

Besonders bevorzugt ist die Spannungsquelle derart ausgebildet, dass die von der Spannungsquelle erzeugte Spannung derart veränderbar ist, dass sie im zeitlichen Verlauf zunächst schnell, d. h. vorzugsweise direkt von Null auf einen vorbestimmten Wert ansteigt und von diesem dann langsamer, vorzugsweise linear abfällt. Besonders bevorzugt wird die eigentliche Messung dann während des Abfallens der Spannung ausgeführt. Dazu wird die Spannung zunächst schnell auf einen Wert oberhalb des lonisierungspotentiales eines zu erfassenden Analyten angehoben und dann langsam abgesenkt, so dass sie wieder unter das lonisierungspotential sinkt. Dabei kommt es dann für den Fall, dass der entsprechende Analyt in dem zu analysierenden Fluid vorhanden ist, zu einem Sprung im Ausgangssignal des Sensorelementes, welcher auf das Vorhandensein des entsprechenden Analyten schließen lässt und gegebenenfalls eine quantitative Bestimmung des Analyten zulässt. D. h. hier wird die Messung bzw. Erfassung des Analyten an dem Sensorelement in dem Moment durchgeführt, wenn der an dem Erfassungsbereich angelagerter Analyt von diesem wieder entfernt wird. Umgekehrt ist auch ein Verfahren durchführbar, bei welchem die Messung dann erfolgt, wenn der Analyt an dem Erfassungsbereich angelagert wird.

Weiter bevorzugt ist eine Steuereinrichtung vorgesehen, welche zur vorzugsweisen automatischen Erfassung zumindest eines Analyten und vorzugsweise mehrerer Analyte die Spannungsquelle zur Abgabe gewünschter charakteristischer Spannungen oder Spannungsverläufe steuert. Dabei kann die Steuereinrichtung in eine Auswerteeinrichtung integriert sein, welche gleichzeitig die aktuelle Potentialdifferenz und das Ausgangssignal des Sensorelementes erfasst. Bevorzugt wird die Spannung kontinuierlich variiert, um, wie oben beschrieben, Analyte an dem Erfassungsbereich des Sensorelementes zu konzentrieren bzw. anzulagern und wieder von diesem zu entfernen.

Das Sensorelement selber kann in verschiedener Weise ausgebildet sein, hier können verschiedene bekannte Sensorsysteme zum Einsatz kommen. Beispielsweise ein Federbalken-Sensor (Microcantilever-Sensor), ein Oberflächenwellen-Sensor (SAW-Sensor), ein Oberflächenplasmonen-Resonanz-Sensor (SPR-Sensor) oder ein Evaneszenz-Feld-Sensor (evanescent field sensor). D. h. die eigentliche Erfassung bzw. Messung der Konzentration der Analyte erfolgt in bekannter Weise. Die zusätzliche Anordnung der Spannungsquelle, welche eine Potentialdifferenz zwischen dem Erfassungsbereich des Sensorelementes und der Umgebung erzeugt, dient lediglich dazu, die zu erfassenden Stoffe bzw. Analyte an dem Sensorelement zu anzulagern, so dass sie derart auch in geringer Konzentration von dem Sensorelement erfasst werden können. D. h. durch die Potentialdifferenz wird erreicht, dass die Konzentration der zu erfassenden Analyte an dem Sensorelement höher ist, als sie in den übrigen Bereichen des Fluids ist. Dies ermöglicht, dass bekannte, ansonsten weniger oder nicht ausreichend empfindliche Sensorelemente eingesetzt werden können und dennoch eine gewünschte hohe Empfindlichkeit erreicht wird. Darüber hinaus kann auf nicht reversible Systeme zum Anlagern bzw. Konzentrieren des zu erfassenden Analyten an den Sensor verzichtet werden.

Ein Federbalken-Sensor basiert auf Änderungen der Oberflächenspannung, wenn ein Analyt an der Oberfläche angelagert ist. Die Erfassung bzw. Messung dieser Änderung wird entweder aufgrund der Änderung der Resonanzfrequenz oder aufgrund der Biegung des Federbalkens durchgeführt. Dies kann durch ein piezoelektrisches Material oder mittels Reflektion eines Laserstrahls gemessen werden. Derartige Sensoren reagieren sehr empfindlich auf Massenänderungen und können Massenänderungen deutlich kleiner als 1 pg (Pikogramm) detektieren.

Oberflächenwellensensoren arbeiten in der Weise, dass Oberflächenwellen von einem piezoelektrischen Substrat erzeugt werden und gemessen werden, nachdem sie einen Sensor- bzw. Erfassungsbereich passiert haben. Wenn Analyte an dem Erfassungsbereich angelagert sind, führt dies zu einer Dämpfung und/oder Phasenverschiebung der Oberflächenwellen. Es existieren zahlreiche verschiedene Oberflächenwellensensoren, von welchen Biege-Platten-Wellen-Sensoren (flexural plate wave (FPW) sensors) und Love-Wave-Sensoren die empfindlichsten sind und ebenfalls in einer Flüssigkeitsumgebung funktionieren.

Oberflächenplasmonen-Resonanz-Sensoren (surface plasmon resonance sensor) basieren auf der Veränderung eines angeregten Zustandes von Elektrodenbewegungen in der Oberfläche eines elektrisch leitfähigen Materials. Eine solche Anregung kann beispielsweise durch Licht erfolgen. Die Anlagerung von Analyten an der Oberfläche verändert die Resonanzfrequenz und kann beipielsweise durch Reflektion eines Laserstrahls gemessen werden. Als Material für die Oberfläche wird üblicherweise Silber oder Gold verwendet, wenn auch andere elektrisch leitfähige Materialien verwendet werden können.

In einem Evaneszent-Feld-Sensor (evanescent field sensor) wird ein elektromagnetisches Feld außerhalb eines Wellenleiters, ein Evaneszent-Feld verwendet. Analyte, welche an der Oberfläche des Wellenleiters angelagert sind, führen zu einer Dämpfung der Welle außerhalb des Wellenleiters, welche erfasst werden kann.

Die Erfindung betrifft ferner ein Verfahren zum Erfassen von Analyten in geringer Konzentration. Erfindungsgemäß wird bei diesem Verfahren ein Sensorelement eingesetzt, welches zum Erfassen zumindest eines Analyten ausgebildet ist. Dabei kann dieses Sensorelement grundsätzlich in bekannter Weise ausgebildet sein. Insbesondere kommen hier bevorzugt Masse-Sensoren zum Einsatz, welche einfach das Vorhandensein von Molekülen oder Ionen an einer Oberfläche erfassen können. Die Anlagerung dieser Moleküle oder Ionen erfolgt erfindungsgemäß dadurch, dass gleichzeitig eine elektrische Spannung an einen Erfassungsbereich des Sensorelementes, angelegt wird bzw. der Erfassungsbereich gegenüber der Umgebung elektrisch geladen wird. Der Erfassungsbereich des Sensorelementes ist derjenige Bereich, an welchem die eigentliche Detektion der angelagerten Stoffe bzw. Moleküle stattfindet. Durch die angelegte Spannung wird eine Potentialdifferenz geschaffen, durch welche die zu erfassenden Analyte zu dem Erfassungsbereich hin bewegt und an diesem konzentriert bzw. angelagert werden. Ferner kann durch geeignete Wahl der Spannung vorzugsweise der Analyt auch wieder von dem Erfassungsbereich entfernt werden. D. h. die Spannung dient dazu, den zu erfassenden Analyten zu dem Erfassungsbereich des Sensorelementes zu bringen und dort vorzugsweise zu konzentrieren, so dass sie durch das Sensorelement erfasst werden können.

Dazu wird die elektrische Spannung bevorzugt derart gewählt, dass sie dem lonisierungspotential eines zu erfassenden Analyten entspricht oder oberhalb dieses lonisierungspotentials liegt. Dadurch wird der Analyt ionisiert und kann aufgrund seiner Ladung zu der Oberfläche des Erfassungsbereiches hingezogen und dort angelagert werden.

Weiter bevorzugt wird die Spannung in Betrag und/oder Polarität variieren, wobei die Spannung im zeitlichen Verlauf das lonisierungspotential eines zu erfassenden Analyten erreicht oder übersteigt. Hierdurch ist eine kontinuierliche Durchführung des Verfahrens möglich, da durch Änderung der Spannung die Analyte an der Oberfläche des Erfassungsbereiches angelagert und anschließend auch von diesem wieder entfernt werden können. Dabei kann die Messung, wie oben ausgeführt, während des Anlagerns oder auch während des Entfernens erfolgen.

Weiter bevorzugt wird ein Ausgangssignal des Sensorelementes einer bestimmten Spannung, welche zeitgleich an dem Erfassungsbereich anliegt, zugeordnet. Auf diese Weise kann bestimmt werden, welcher bzw. was für ein Analyt an der Oberfläche des Erfassungsbereiches anliegt. Diese Identifikation erfolgt über das charakteristische lonisierungspotential des Analyten. Wenn die Spannung in diesem Bereich liegt oder während der gerade ausgeführten Messung dieses Potential unter - oder überschritten hat, kann der Messwert des Sensorelementes eindeutig dem Analyt mit diesem bestimmten lonisierungspotential zugeordnet werden.

Gemäß einem besonders bevorzugten Verfahren wird der zeitliche Verlauf der Spannung derart gewählt, dass die Spannung zunächst direkt auf einen Maximalwert oberhalb des lonisierungspotentials zumindest einen zu erfassenden Analyten angehoben wird. Dies führt zur lonisierung des Analyten und dazu, dass dieser sich an der Oberfläche des Erfassungsbereiches anlagert. Anschließend wird die Spannung ausgehend von diesem Maximalwert wieder reduziert, das heißt sie fällt vorzugsweise linear ab, wobei das lonisierungspotential wieder unterschritten wird. Sobald das lonisierungspotential unterschritten wird, lösen sich die Analyte wieder von der Oberfläche des Erfassungsbereiches, sodass sich der Messwert des Sensorelementes schlagartig ändert. Dieser Messwertunterschied kann zur Bestimmung des Vorhandenseins eines Analyten mit dem charakteristischen lonisierungspotential genutzt werden, wobei bevorzugt aus der Messwertdifferenz auch die Quantität, das heißt die Konzentration des Analyten in dem umgebenden Fluid bestimmt werden kann. Weiter bevorzugt ist es, dass die Spannung auf einen Maximalwert oberhalb einer Vielzahl von lonisierungspotentialen unterschiedlicher Analyte angehoben wird und dann derart abgesenkt wird, dass nacheinander die einzelnen lonisierungspotentiale unterschritten werden, wobei bei jedem Unterschreiten eines lonisierungspotentials eine Messung für den Analyten mit gerade diesem lonisierungspotential durchgeführt wird. So können verschiedene Analyte in einem Messdurchlauf bestimmt werden. Dieser Vorgang kann sich direkt aufeinander folgend, vorzugsweise kontinuierlich wiederholen, sodass eine quasi kontinuierliche Messung durchgeführt werden kann.

Nachfolgend wird die Erfindung beispielhaft anhand der beigefügten Figuren beschrieben. In diesen zeigt:
- Fig. 1: Schematisch eine erste bevorzugte Ausführungsform der Erfindung unter Verwendung eines Federbolkensensors,
- Fig. 2a und 2b: schematisch die Funktionsweise des Federbalkensensors,
- Fig. 3a: den Spannungsverlauf,
- Fig. 3b: die Biegekurve eines Federbalkensensors bei dem Span- nungsverlauf gemäß Fig. 3a,
- Fig. 4 a und c: Spannungsverläufe gemäß weiterer bevorzugter Ausfüh- rungsform,
- Fig. 4b und d: die zu den Spannungsverläufen gemäß Fig. 4a und c zu- gehörigen Biegekurven eines Federbalkensensors,
- Fig. 5: schematisch eine Ausführungsform gemäß der Erfindung unter Verwendung eines Oberflächenwellensensors,
- Fig. 6: eine Ausführungsform der Erfindung unter Verwendung eines Oberflächenplasmonen-Resonanz-Sensors und
- Fig. 7: schematisch eine Ausführungsform der Erfindung unter Verwendung eines Evaneszentfeldsensors.

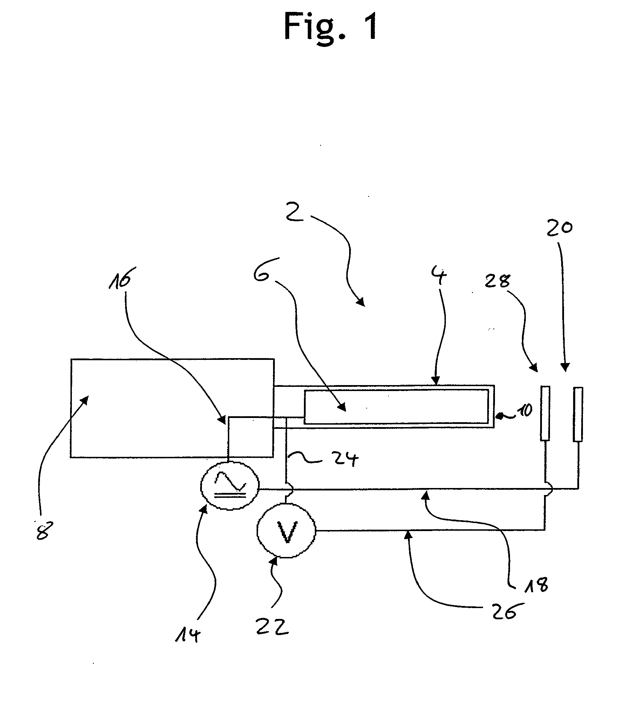

Das Sensorsystem 2 gemäß Figur 1 weist ein Sensorelement 4 in Form eines Federbalkens auf. Auf dem Federbalken 4 ist ein Erfassungsbereich 6 als Arbeitselektrode ausgebildet. Der Federbalken 4 ist an seinem ersten Ende an einem Basiselement 8 angelenkt. Das entgegengesetzte freie Längsende 10 ist frei beweglich, d. h. der Federbalken 4 kann sich ausgehend von dem Anlenkungsbereich an dem Basiselement 8 biegen.

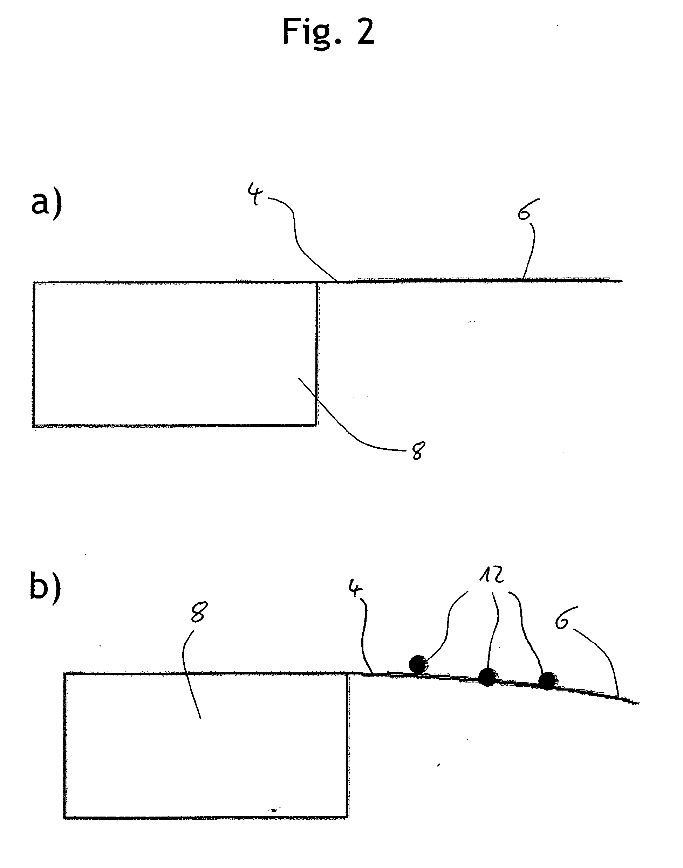

Die Erfassung von bestimmten Analyten durch das Sensorelement 4 erfolgt wie schematisch in Figuren 2a und 2b gezeigt. In Figur 2a ist der Ruhezustand des Sensorelementes 4 gezeigt, es erstreckt sich im Wesentlichen gerade ausgehend von dem Basiselement 8. An der Oberfläche des Sensorelementes 4, d. h. dem Erfassungsbereich 6 sind keine Elemente angelagert. Figur 2b zeigt einen Zustand, in welchem Elemente bzw. Moleküle 12 eines Analyten an dem Erfassungsbereich 6 angelagert sind. Die Anlagerung der Moleküle 12 an der Oberfläche des Sensorelementes 4 führt zu einer Veränderung der Oberflächenspannung und einer Biegung bzw. Auslenkung des Federbalkens. Diese Auslenkung des Sensorelementes bzw. Federbalkens 4 kann beispielsweise durch piezoelektrische Elemente, welche an oder in dem Sensorelement 4 angeordnet sind, gemessen werden. Alternativ ist es z. B. auch möglich, diese Biegung durch Reflektion eines Laserstrahls auf den Sensorelement 4 zu bestimmen.

Die Anlagerung der Moleküle 12 bzw. des Analyten 12 an der Oberfläche des Erfassungsbereiches 6 erfolgt in elektrochemischer Weise. Dazu ist eine Spannungsquelle bzw. ein Spannungsgenerator 14, welcher über eine erste Leitung 16 mit der Erfassungsbereich 6, welcher die Arbeitselektrode bildet, verbunden ist. Der Spannungsgenerator 14 ist über eine zweite Leitung 18 mit einer Gegenelektrode 20 verbunden. Sowohl der Erfassungsbereich 6 als auch die Gegenelektrode 20 werden in das Fluid, in welchem Analyte bestimmt werden sollen, eingetaucht. Auf diese Weise kann durch den Spannungsgenerator 14 eine Spannung zwischen dem Erfassungsbereich 6 und der Gegenelektrode 20 erzeugt werden, d. h. der Erfassungsbereich 6 gegenüber der Umgebung elektrisch geladen werden. Die Potentialdifferenz zwischen dem Erfassungsbereich 6 und der Umgebung führt, wenn das lonisierungspotential eines Analyten von der Spannung zwischen Erfassungsbereich 6 und dem elektrischen Potential der Umgebung überschritten wird, zur Ionisierung des Analyten, welcher daraufhin zu dem Erfassungsbereich 6 wandert und dort auf elektrochemische Weise angelagert wird und so zur Auslenkung des Federbalkens 4 führt, die in Figur 2b gezeigt ist. Dieser Prozess ist reversibel, indem die Spannung, welche von dem Spannungsgenerator 14 erzeugt wird, wieder unter das lonisierungspotential dieses Analyten abgesenkt wird. Dann bewegen sich die Moleküle des Analyten wieder von dem Erfassungsbereich 6 weg.

In dem Ausführungsbeispiel gemäß Figur 1 ist darüber hinaus ein Spannungsmesssystem 22 vorgesehen, welches über eine erste Leitung 24 mit dem Erfassungsbereich 6 verbunden ist. Über eine zweite Leitung 26 ist das Spannungsmesssystem 22 mit einer Referenzelektrode 28 verbunden, welche ebenfalls in das Fluid, indem die Analyte zu bestimmen sind, eingetaucht ist. Durch die zwischen der Referenzelektrode 28 und dem Erfassungsbereich 6 erfasste Spannung kann ein Analyt anhand seines lonisierungspotentials genau identifiziert werden. Im gezeigten Beispiel wird eine Gegenelektrode 20 verwendet. Auf diese Gegenelektrode 20 könnte jedoch verzichtet werden. Der Erfassungsbereich 6 könnte auch ohne die Gegenelektrode 20 gegenüber der Umgebung elektrisch geladen werden. Z. B. ist es denkbar, dass die Referenzelektrode 28 gleichzeitig als Gegenelektrode 20 dient.

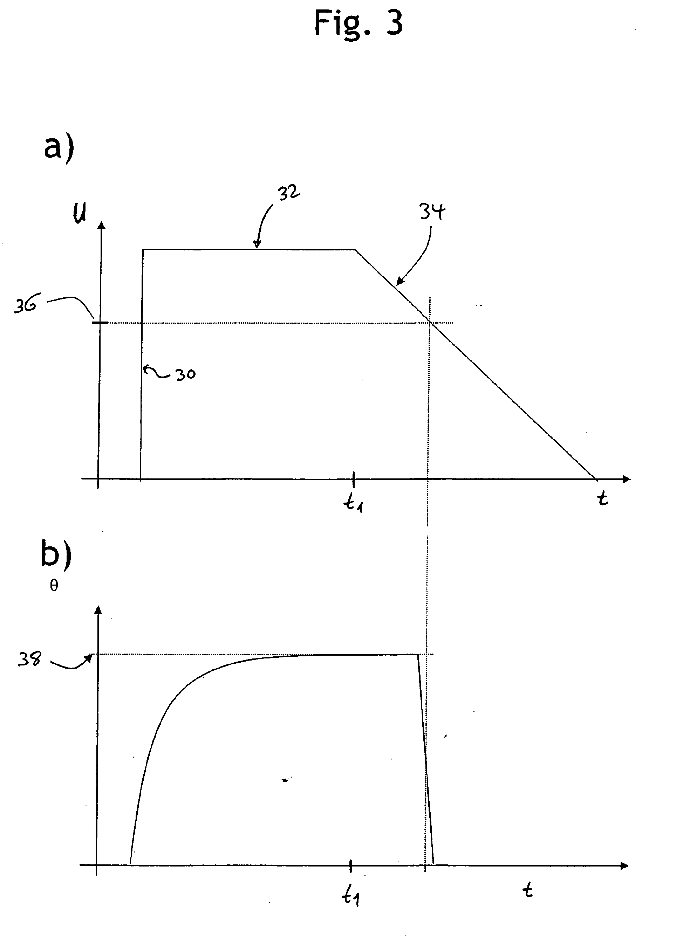

Die Erfassung der Spannungsdifferenz zwischen dem Erfassungsbereich 6 und der Referenzelektrode 28 erlaubt die Zuordnung des Messergebnisses von dem Sensorelement 4 zu einem bestimmten Analyten, indem festgestellt wird, bei welcher Spannung sich das Messergebnis von dem Sensorelement 4 ändert. Wenn diese Spannung dem lonisierungspotential eines bestimmten Analyten entspricht, kann daraus geschlossen werden, dass die Änderung des Messergebnisses, welche zeitgleich von dem Sensorelement 4 erfasst wurde, von genau diesem Analyten mit dem von dem Spannungsmesssystem 22 erfassten lonisierungspotential herrührt. Die Funktion dieser Messung wird näher anhand der Figuren 3a und 3b beschrieben. Dabei zeigt Figur 3a den Spannungsverlauf U über der Zeit t, wie er von dem Spannungsgenerator 14 zwischen dem Erfassungsbereich 6 und der Umgebung erzeugt und durch das Spannungsmesssystem 22 zwischen dem Erfassungsbereich 6 und der Referenzelektrode 28 erfasst wird. Figur 3b zeigt die zugehörige Auslenkung θ des Sensorelementes 4 aufgetragen über die Zeit t. Die Spannung U wird zunächst in einem ersten Abschnitt 30 des Spannungsverlaufes im Wesentlichen direkt auf das Spannungsniveau, welches im zweiten Abschnitt 32 des Spannungsverlaufes herrscht, angehoben. Dabei wird das lonisierungspotential 36 zumindest eines zu bestimmenden Analyten überschritten. Im zweiten Abschnitt 32 der Spannungskurve wird die Spannung zunächst bis zu einem Zeitpunkt t₁ konstant auf dem Niveau oberhalb des lonisierungspotentials 36 gehalten. Nach dem Überschreiten des lonisierungspotentials lagert sich eine zunehmende Anzahl von Molekülen 12 des Analyten an dem Sensorelement 4 an, wie in Figur 2b gezeigt ist. Dies führt zu einer zunehmenden Auslenkung θ des Sensorelementes 4, bis diese ihren Maximalwert 38 erreicht. Ausgehend vom Zeitpunkt t₁ wird die Spannung dann in einem dritten Abschnitt 34 der Spannungskurve linear auf 0 abgesenkt, wobei dieses Absenken der Spannung deutlich langsamer erfolgt als das Anheben der Spannung im ersten Abschnitt 30 der Spannungskurve 34. Wenn die Spannung im dritten Abschnitt 34 des Spannungsverlaufes das lonisierungspotential 36 unterschreitet, führt dies dazu, dass die an dem Erfassungsbereich 36 angelagerten Analyte bzw. Moleküle 12 sehr schnell wieder entfernt werden, weshalb der Biegewinkel θ zu diesem Zeitpunkt sehr schnell auf 0 abfällt, wie in Figur 3b zu erkennen ist. Bei entsprechender Kalibrierung des Sensorelementes 4 kann aus dem maximalen Biegewinkel 38 vor dem Unterschreiten des lonisierungspotentials 36 und dem Biegewinkel θ nach dem Unterschreiten (idealerweise = 0) auf die Konzentration des Analyten mit dem lonisierungspotential 36 in dem umgebenden Fluid geschlossen werden.

Dieser in Figur 3a gezeigte Spannungsverlauf kann periodisch wiederholt werden, sodass eine quasi kontinuierliche Messung in dem Fluid durchgeführt werden kann. Wenn der Spannungsverlauf so gewählt wird, dass mehrere auf unterschiedlichen Potentialniveaus liegende lonisierungspotentiale verschiedener Analyte beim Anheben der Spannung im ersten Abschnitt 30 der Spannungskurve überschritten werden, dann wird es beim anschließenden Absenken der Spannung im dritten Abschnitt 34 der Spannungskurve zu mehreren Sprüngen in der Kurve des Biegewinkels θ kommen, wenn jeweils ein lonisierungspotential eines bestimmten Analyten unterschritten wurde und dieser Analyt in dem Fluid vorhanden war. So können mehrere Analyte gleichzeitig in einem Spannungsdurchlauf erfasst werden.

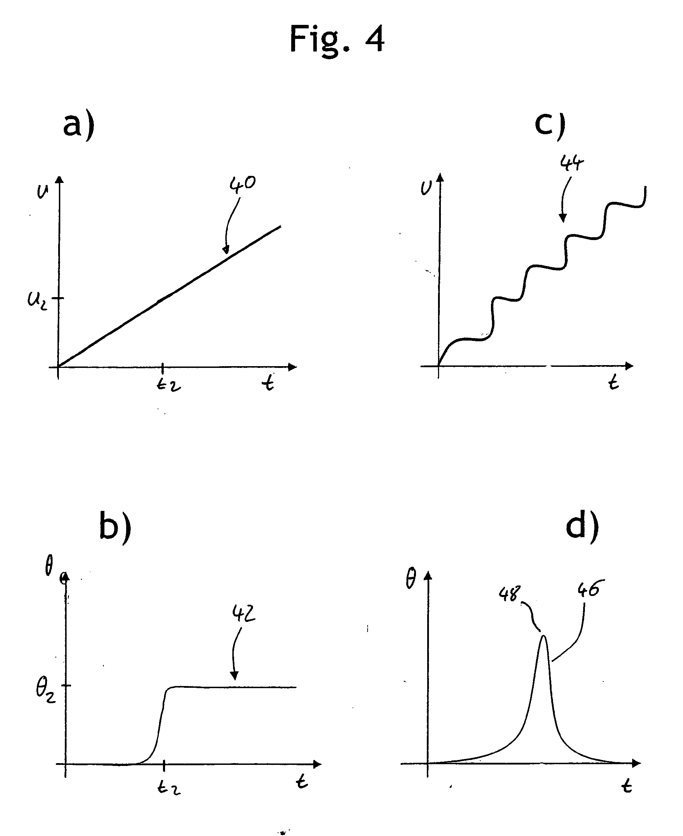

Figur 4a und Figur 4b zeigen noch einmal den Spannungsverlauf 40 aufgetragen über der Zeit t, wenn die Spannung U zwischen dem Erfassungsbereich 6 und der Umgebung langsam linear ansteigt. Figur 4b zeigt den zugehörigen Verlauf 42 des Biegewinkels θ. Zu erkennen ist, dass es, wenn zum Zeitpunkt t₂ das lonisierungspotential U₂ eines bestimmten Analyten unterschritten wird, zu einem Sprung im Verlauf 42 des Biegewinkels θ kommt, d. h. das Sensorelement 4 wird zum Zeitpunkt t₂ durch Anlagerung des entsprechenden Analyten ausgelenkt und erreicht den Biegewinkel θ₂.

Figur 4c zeigt einen möglichen zeitlichen Verlauf der Potentialdifferenz zwischen dem Erfassungsbereich 6 und der Referenzelektrode 28 bei Verwendung von Wechselspannung, wobei hier die Wechselspannung über die Zeit linear erhöht wird. Der Verlauf 44 des Wechselspannungssignals ist die Summe eines langsam ansteigenden Gleichspannungssignals und eines Wechselspannungssignals mit einer bestimmten konstanten Frequenz. Dabei sollte die Amplitude der Wechselspannung im Vergleich zu der Änderung der Gleichspannung über die Zeit t klein gewählt werden. Figur 4d zeigt den zugehörigen Verlauf 46 des Biegewinkels θ des Sensorelementes 4 bei der Anlagerung eines Analyten 12. Der Biegewinkel θ des Federbalkens 4 ist ebenfalls die Summe einer Gleichspannungskomponente und einer Wechselspannungskomponente welche mit derselben Frequenz wie die Wechselspannung gemäß Figur 4c schwingt. Figur 4d zeigt nur die Amplitude der Wechselspannungskomponente, welche ihren Maximalwert 48 hat, wenn die angelegte Spannung zwischen Erfassungsbereich 6 und der Referenzelektrode 28 das lonisierungspotential eines spezifischen Analyten übersteigt.

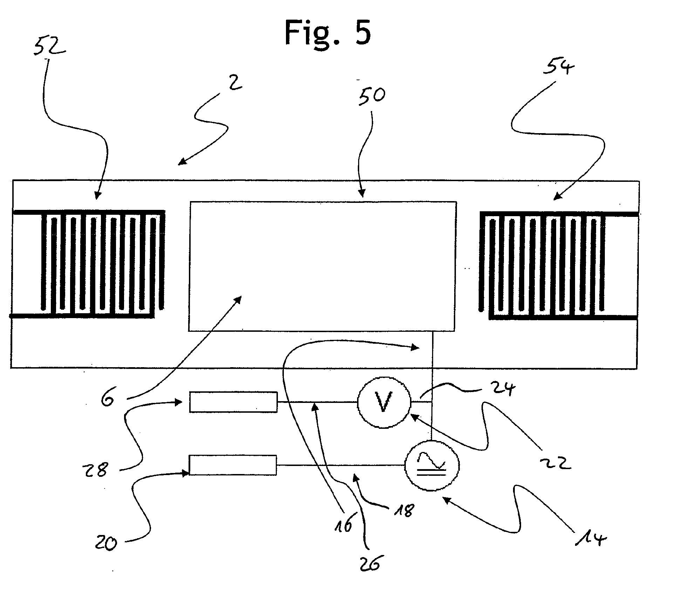

Figur 5 zeigt schematisch ein Sensorsystem gemäß der Erfindung unter Verwendung eines Oberflächenwellensensors. Dabei unterscheidet sich das Sensorsystem gegenüber dem vorangehend beschriebenen System nur in der Art des Sensorelementes. Alle übrigen Komponenten insbesondere die zur elektrochemischen Bindung der zu erfassenden Analyte an dem Erfassungsbereich 6 erforderlichen Komponenten entsprechen dem vorgehend beschriebenen System. Für gleiche Bauteile werden hier gleiche Bezugsziffern verwendet.

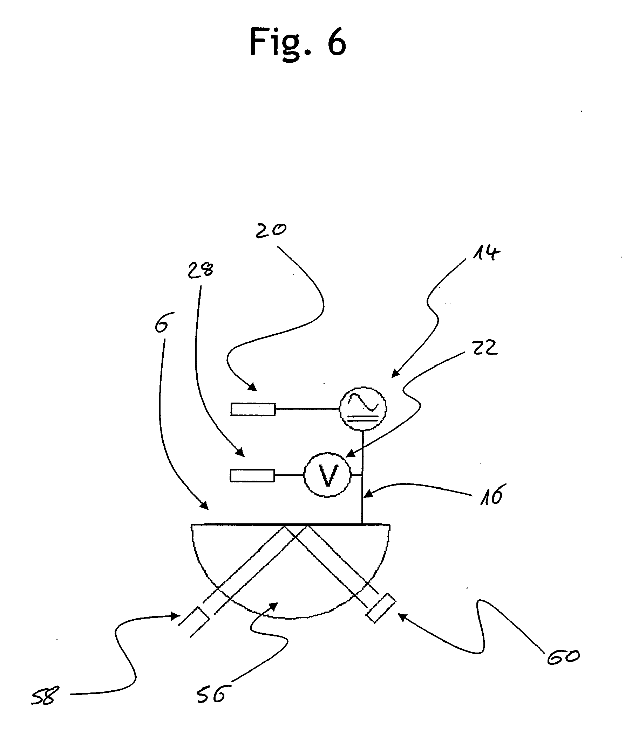

Das Sensorelement 50 gemäß Figur 5 weist einen Erfassungsbereich 6 auf, welcher als Arbeitselektrode dient und an welchen in der vorangehend beschriebenen Weise auf elektrochemischem Wege die Moleküle 12 eines zu erfassenden Analyten oder mehrere zu erfassender Analyte angelagert werden. Seitlich des Erfassungsbereiches 6 sind an dem Sensorelement 50 ein Eingangswandler 52 und ein Ausgangswandler 54 ausgebildet. Diese können beispielsweise aus elektrisch leitenden Materialien in Dünnschichttechnik ausgebildet sein. Dabei dient der Eingangswandler 52 zum Erzeugen einer Oberflächenwelle auf dem Sensorelement 50 und der Ausgangswandler 54 zum Erfassen dieser erzeugten Oberflächenwelle. Diese Oberflächenwelle bzw. Oberflächenwellen durchlaufen den Erfassungsbereich 6. Dabei kommt es je nachdem, ob und wie viele Moleküle an dem Erfassungsbereich 6 angelagert sind, zu Veränderungen der Oberflächenwelle insbesondere zu einer Dämpfung, einer Phasen- oder Frequenzverschiebung der Oberflächenwelle, welche an dem Ausgangswandler 54 im Vergleich zu dem an dem Eingangswandler 52 angelegten Signal erfasst werden kann. Auf diese Weise kann die Anwesenheit und die Quantität eines Analyten 12, welcher an der Oberfläche des Erfassungsbereiches 6 in der vorangehend beschriebenen Weise angelagert ist, erfasst werden. Figur 6 zeigt schematisch ein Sensorsystem unter Verwendung eines Oberflächenplasmonen-Resonanz-Sensors (SPR-Sensors). Das Sensorelement 56 wird hier vor einem optischen Prisma gebildet, an dessen Oberfläche der Erfassungsbereich 6 als Arbeitselektrode durch eine dünne Beschichtung mit einem elektrisch leitfähigen Material ausgebildet ist. Auch hier erfolgt die Anlagerung der Analyte an dem Erfassungsbereich 6 in der vorangehend beschriebenen Weise. Auch hier werden für gleiche Elemente gleiche Bezugsziffern verwendet, sodass auch die vorangehende Beschreibung dieser Bauteile anhand der Figuren 1 bis 3 verwiesen wird. Die Detektion der Analyte an dem Erfassungsbereich 6 erfolgt hier in der Weise, dass auf die Oberfläche, an welcher der Erfassungsbereich 6 ausgebildet ist von einer Laserquelle 58 ein Laserstrahl gerichtet wird, welcher im Inneren des Prismas 56 an der Oberfläche reflektiert und von einem optischen Detektor 60 erfasst wird. Durch diesen Laserstrahl können Veränderungen der Oberflächenplasmonenresonanz, welche durch die angelagerten Analyte 12 verursacht werden, erfasst werden. Der Aufbau des Sensorelementes 56 kann dabei herkömmlichen Oberflächenplasmonen-Resonanz-Sensoren entsprechen.

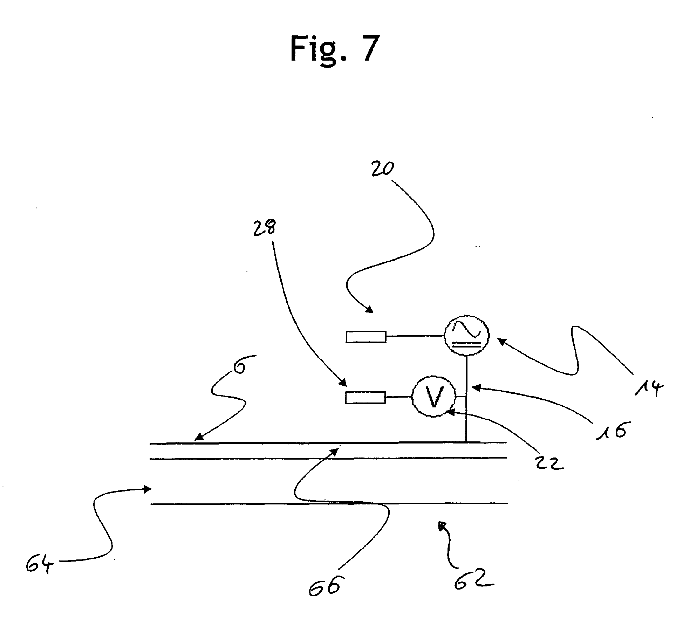

Figur 7 zeigt ein weiteres Ausführungsbeispiel, bei welchem als Sensorelement 62 ein Evaneszentfeldsensor verwendet wird. Dieses Sensorelement 62 weist ein Substrat 64 auf, an dessen Oberfläche ein Wellenleiter 66 ausgebildet ist. Auf der Oberfläche des Wellenleiters 66 ist als Schicht aus einem elektrisch leitfähigen Material der Erfassungsbereich 6, welcher in der vorangehend beschriebenen Weise als Arbeitselektrode dient, ausgebildet. Die Anlagerung der zu erfassenden Analyte 12 an dem Erfassungsbereich 6 erfolgt dabei wiederum in der vorangehend, anhand von Figuren 1 bis 4 beschriebenen Weise. Auch hier werden wieder dieselben Bezugszeichen verwendet, sodass auf die vorangehende Beschreibung dieser Bauteile verwiesen wird. Die Dicke des Wellenleiters 66 ist üblicherweise das Mehrfache der Wellenlänge des Strahls im Inneren des Wellenleiters 66. Das elektromagnetische Feld, welches durch die Wellen im Wellenleiter 66 an dessen Oberfläche erzeugt wird, wird durch die Anlagerung der Analyte an dem Erfassungsbereich 6 verändert. Dies führt zu einer Dämpfung bzw. Veränderung der Welle an der Oberfläche des Wellenleiters 66, welche in bekannter Weise erfasst werden kann. Der Evaneszentfeldsensor kann in herkömmlicher Weise ausgestaltet sein.

Insgesamt ist festzustellen, dass verschiedenste, bekannte Sensoren bzw. Sensorelemente verwendet werden können. Erfindungsgemäß muss an diesen lediglich ein elektrisch leitfähiger Erfassungsbereich 6 ausgebildet werden, an welchem die zu erfassenden Analyte angelagert werden können und von dem Sensorelement detektiert werden können. Die Anlagerung und Entfernung der Analyte 12 erfolgt dabei in der vorangehend beschriebenen elektrochemischen Weise.

### Bezugszeichenliste

- 2: Sensorsystem
- 4: Sensorelement
- 6: Erfassungsbereich
- 8: Basiselement
- 10: Freies Ende
- 12: Analyte, Moleküle
- 14: Spannungsgenerator
- 16, 18: Leitungen
- 20: Gegenelektrode
- 22: Spannungsmesssystem
- 24, 26: Leitungen
- 28: Referenzelektrode
- 30, 32, 34: Abschnitte der Spannungskurve
- 36: lonisierungspotential
- 38: Maximale Auslenkung
- 40, 44: Spannungsverlauf
- 42, 46: Verlauf des Biegewinkels θ
- 48: Maximalwert
- 50: Sensorelement
- 52: Eingangswandler
- 54: Ausgangswandler
- 56: Sensorelement
- 58: Laserquelle
- 60: Optischer Detektor
- 62: Sensorelement
- 64: Substrat
- 66: Wellenleiter
- T: Biegewinkel
- U: Spannung
- t: Zeit

## Patentansprüche

1. Sensorsystem (2) zum Erfassen von Analyten in geringer Konzentration, welches zumindest ein Sensorelement (4; 50; 56; 62) mit wenigstens einem Erfassungsbereich (6) aufweist, der zur Detektion zumindest eines Analyten an seiner Oberfläche ausgebildet ist, **gekennzeichnet durch**
eine Spannungsquelle (14) , mittels welcher der Erfassungsbereich (6) des Sensorelementes (4; 50; 56; 62) mit einer elektrischen Spannung beaufschlagbar ist.

2. Sensorsystem nach Anspruch 1, **dadurch gekennzeichnet, dass** die Spannungsquelle (14) mit dem Erfassungsbereich (6) und einer Gegenelektrode (20) derart verbunden ist, dass die von der Spannungsquelle (14) erzeugte Spannung zwischen dem Erfassungsbereich (6) und der Gegenelektrode (20) anlegbar ist.

3. Sensorsystem nach Anspruch 1 oder 2, **dadurch gekennzeichnet, dass** die von der Spannungsquelle (14) erzeugte Spannung dem lonisierungspotential (36) eines zu erfassenden Analyten (12) entspricht oder höher als dieses lonisierungspotential (36) ist.

4. Sensorsystem nach einem der vorangehenden Ansprüche, **dadurch gekennzeichnet, dass** die Spannungsquelle (14) derart ausgebildet ist, dass die Spannung in Betrag und/oder Polarität veränderbar ist und insbesondere im zeitlichen Verlauf veränderbar ist.

5. Sensorsystem nach einem der vorangehenden Ansprüche, **dadurch gekennzeichnet, dass** das Sensorelement (4; 50; 56; 62) derart ausgebildet ist, dass es ein Ausgangssignal erzeugt, welches abhängig von der Konzentration des Analyten (12) an dem Erfassungsbereich (6) ist.

6. Sensorsystem nach einem der vorangehenden Ansprüche, **dadurch gekennzeichnet, dass** eine Auswerteeinrichtung vorgesehen ist, welche zur Erfassung und gemeinsamen Auswertung eines Ausgangssignals des Sensorelementes (4; 50; 56; 62) und der aktuellen Spannung, welche an dem Erfassungsbereich (6) des Sensorelementes (4; 50; 56; 62) anliegt, ausgebildet ist.

7. Sensorsystem nach einem der vorangehenden Ansprüche, **dadurch gekennzeichnet, dass** ein Spannungsmesssystem (22) zum Erfassen der Spannung zwischen dem Sensorelement (4; 50; 56; 62) und der Umgebung vorgesehen ist.

8. Sensorsystem nach Anspruch 7, **dadurch gekennzeichnet, dass** eine Referenzelektrode (28) vorgesehen ist und das Spannungsmesssystem (22) zum Erfassen der Spannung zwischen dieser Referenzelektrode (28) und dem Erfassungsbereich (6) des Sensorelementes (4; 50; 56; 62) ausgebildet ist.

9. Sensorsystem nach einem der vorangehenden Ansprüche, **dadurch gekennzeichnet, dass** die von der Spannungsquelle (14) erzeugte Spannung derart veränderbar ist, dass sie im zeitlichen Verlauf zunächst schnell auf einen vorbestimmten Wert (32) ansteigt und von diesem dann langsamer, vorzugsweise linear abfällt.

10. Sensorsystem nach einem der vorangehenden Ansprüche, **dadurch gekennzeichnet, dass** eine Steuereinrichtung vorgesehen ist, welche zur vorzugsweise automatischen Erfassung zumindest eines Analyten und vorzugsweise mehrerer Analyten die Spannungsquelle (14) zur Abgabe gewünschter charakteristischer Spannungen oder Spannungsverläufe steuert.

11. Sensorsystem nach einem der vorangehenden Ansprüche, **dadurch gekennzeichnet, dass** das Sensorelement (4) ein Federbalken-Sensor (Microcantilever-Sensor) ist.

12. Sensorsystem nach einem der vorangehenden Ansprüche, **dadurch gekennzeichnet, dass** das Sensorelement (50) ein Oberflächenwellensensor (SAW-Sensor) ist.

13. Sensorsystem nach einem der vorangehenden Ansprüche, **dadurch gekennzeichnet, dass** das Sensorelement (56) ein Oberflächenplasmonen-Resonanz-Sensor (SPR-Sensor) ist.

14. Sensorsystem nach einem der vorangehenden Ansprüche, **dadurch gekennzeichnet, dass** das Sensorelement (62) ein Evaneszent-Feld-Sensor ist.

15. Verfahren zum Erfassen von Analyten in geringer Konzentration, bei welchem ein Sensorelement (4; 50; 56; 62), welches zur Erfassung zumindest eines Analyten (12) ausgebildet ist, eingesetzt wird,
**dadurch gekennzeichnet, dass** gleichzeitig eine elektrische Spannung an einen Erfassungsbereich (6) des Sensorelementes (4; 50; 56; 62) angelegt wird, um einen zu erfassenden Analyten (12) an dem Erfassungsbereich (6) anzulagern und vorzugsweise auch wieder von dem Erfassungsbereich (6) zu entfernen.

16. Verfahren nach Anspruch 15, **dadurch gekennzeichnet, dass** die elektrische Spannung derart gewählt wird, dass sie dem lonisierungspotential (36) eines zu erfassenden Analyten (12) entspricht oder oberhalb dieses lonisierungspotentials (36) liegt.

17. Verfahren nach Anspruch 15 oder 16, **dadurch gekennzeichnet, dass** die Spannung in Betrag und/oder Polarität variiert wird, wobei die Spannung im zeitlichen Verlauf das lonisierungspotential (36) eines zu erfassenden Analyten (12) erreicht oder übersteigt.

18. Verfahren nach einem der Ansprüche 15 bis 17, **dadurch gekennzeichnet, dass** ein Ausgangssignal des Sensorelementes (4; 50; 56; 62) einer bestimmten Spannung, welche an dem Erfassungsbereich (6) anliegt, zugeordnet wird.

19. Verfahren nach einem der Ansprüche 15 bis 18, **dadurch gekennzeichnet, dass** ein zeitlicher Verlauf der Spannung verwendet wird, bei dem die Spannung zunächst auf einen Maximalwert (32) oberhalb des lonisierungspotentials (36) zumindest eines zu erfassenden Analyten (12) ansteigt und dann ausgehend von diesem Maximalwert (32) wieder unter das lonisierungspotential (36) abfällt.

20. Verfahren nach Anspruch 19, **dadurch gekennzeichnet, dass** die Erfassung des Analyten (12) an dem Erfassungsbereich (6) erfolgt, während die Spannung von dem Maximalwert (32) abfällt.
